# EUROPÄISCHE PATENTSCHRIFT

(11) **EP 0 803 673 B1**
(45) Veröffentlichungstag und Bekanntmachung des Hinweises auf die Patenterteilung: **26.06.2002**
(21) Anmeldenummer: 97106432.4
(22) Anmeldetag: 18.04.1997
(51) Int. Cl.: F16K 31/06, F16K 13/10

(54) **Gasdurchströmtes Ventil**
Gas valve
Soupape à gaz

(30) Priorität: 23.04.1996 DE 29607363 U
(43) Veröffentlichungstag der Anmeldung: 29.10.1997
(73) Patentinhaber: Bürkert Werke GmbH & Co., D-74653 Ingelfingen (DE)
(72) Erfinder: Rohrbeck, Heribert, 74523 Schwäbisch Hall (DE)
(74) Vertreter: Kitzhofer, Thomas, Dipl.-Ing.

(56) Entgegenhaltungen:
- DE-A- 2 758 072
- US-A- 2 670 749
- US-A- 3 970 112
- US-A- 3 982 722
- US-A- 5 190 073

## Beschreibung

Die Erfindung betrifft ein gasdurchströmtes Ventil mit mindestens einem Gaseinlaß und mindestens einem Gasauslaß gemäß dem Oberbegriff der Ansprüche 1 und 3.

Bislang übliche gasdurchströmte Ventile weisen einen oder mehrere Absperrkörper zwischen dem Gaseinlaß und dem Gasauslaß auf, die, entsprechend ihrer Lage, einen Gasfluß durch das Ventil erlauben oder den Strömungsweg unterbrechen. Die beweglichen Absperrkörper müssen entsprechend eng toleriert sein, damit in der Absperrstellung des Ventils keine Leckströme auftreten. Die bislang üblichen gasdurchströmten Ventile sind in ihrer Herstellung meist aufwendig.

Aus der US 2 670 749 ist ein gattungsgemäßes Ventil bekannt, bei dem der Fluß eines Fluids in einer Leitung durch ein magnetisches Öl gesteuert wird. Bei Anlegen eines Magnetfelds nimmt das Öl einen festeren Zustand an und setzt dem hindurchströmenden Fluid dadurch einen größeren Widerstand entgegen.

Ein ebenfalls mit einer magnetischen Flüssigkeit als Dichtung arbeitendes Ventil ist in der US 5 190 073 gezeigt.

Bei magnetischen Flüssigkeiten handelt es sich um stabile disperse Systeme, die modifizierte magnetische Partikel von der Größe einiger Nanometer als dispergierte Phase enthalten. Als Dispersionsträger können zum Beispiel Wasser, Kohlenwasserstoffe oder auch Vakuum- und Dispersionsöle verwendet werden. Durch gezielte Veränderung der chemischen Zusammensetzung sind verschiedene magnetische Flüssigkeiten herstellbar, die auf einen jeweiligen Verwendungszweck hin optimierbar sind.

Magnetische Flüssigkeiten werden bislang zum Beispiel bei der magnetohydraulischen Separierung verwendet, bei der der magnetisch bedingte, von der Dichte und dem Magnetfeldgradienten abhängige Auftrieb von Nichtmetallen in der magnetischen Flüssigkeit zu der Trennung der Nichtmetalle genutzt wird. Darüber hinaus werden magnetische Flüssigkeiten auch für die Abdichtung, Lagerung, Dämpfung und Entlastung von Wellen genutzt. Im Automobilbau dienen magnetische Flüssigkeiten u.a. zur Einstellung unterschiedlicher Dämpfungen von Fahrzeugen, da unterschiedliche Härtegrade durch unterschiedlich große Magnetfelder erzeugt werden können, die unterschiedliche Viskositäten der magnetischen Flüssigkeit zur Folge haben.

Aufgabe der Erfindung ist es, ein einfach aufgebautes gasdurchströmtes Ventil mit verbesserter Öffnungs- und Schließwirkung zu schaffen.

Diese Aufgabe wird erfindungsgemäß durch ein gasdurchströmtes Ventil mit den Merkmalen des Anspruchs 1 oder mit den Merkmalen des Anspruchs 3 gelöst.

Das erfindungsgemäße gasdurchströmte Ventil arbeitet statt mit einem beweglichen Schieberkörper oder einen besonderen Absperrkörper mit einer magnetischen Flüssigkeit und ist deshalb sehr einfach aufgebaut und sehr robust, da es keinem Verschleiß unterworfen ist.

Die vorliegende Erfindung sieht die Verwendung der magnetischen Flüssigkeit für die Schaltung eines Gasventils vor, indem die Viskositätsänderung der magnetischen Flüssigkeit durch Aufbringen eines Magnetfelds genutzt wird. Wenn kein oder nur ein geringes Magnetfeld angelegt ist, bleibt die magnetische Flüssigkeit flüssig und homogen. In diesem Zustand kann ein Gas vom Gaseinlaß durch die Flüssigkeit bis zum Gasauslaß strömen. Durch Anlegen eines ausreichend starken Magnetfelds hingegen geht die magnetische Flüssigkeit vom flüssigen in den festen Zustand über, in welchem das Gas durch die erstarrte magnetische Flüssigkeit abgesperrt wird. Darüber hinaus wird die magnetische Flüssigkeit vom Magnetfeld angezogen, d.h. ein verschiebbarer Magnet kann gezielt dazu eingesetzt werden, einzelne Ein- oder Auslässe zu sperren oder zu öffnen. Denkbar ist auch, ein nur mäßig starkes Magnetfeld anzulegen, durch das die magnetische Flüssigkeit den Gasfluß nicht vollständig absperrt und einen teilweisen Gasdurchlaß erlaubt, so daß sich die durch das erfindungsgemäße Ventil hindurchströmende Gasmenge stufenlos einstellen läßt.

Gemäß einem ersten Aspekt der Erfindung ist vorgesehen, der magnetischen Flüssigkeit nichtmagnetische Partikel, wie z.B. Kunststoffe, Gummi oder dia- beziehungsweise paramagnetische Metalle wie Kupfer oder Aluminium hinzuzufügen, die das Schalten des Ventils unterstützen. Die nichtmagnetischen Partikel können zum einen in der magnetischen Flüssigkeit einen von ihrer Dichte und dem Magnetfeldgradienten abhängigen magnetischen Auftrieb erhalten und werden so an den oberen Rand der magnetischen Flüssigkeit abgedrängt. Zum anderen können Teilchen ohne magnetischen Auftrieb vorgesehen sein, die durch die Viskositätsänderung bei Anlegen eines Magnetfelds aneinandergepreßt werden. In jedem Fall wird durch das Vorsehen solcher nichtmagnetischer Partikel eine beschleunigte und verbesserte Absperrwirkung des Ventils erreicht.

Gemäß einem zweiten Aspekt der Erfindung sind in der magnetischen Flüssigkeit Tenside vorhanden, die aufgrund ihrer Molekularstruktur grenzflächenaktiv wirken und als Netzmittel eingesetzt werden, wobei sich Ester und Fettsäuren besonders eignen.

Zum Öffnen eines Gaseinlasses und/oder Gasauslasses sind zwei verschiedene Grundprinzipien möglich. Beim ersten Prinzip ist vorgesehen, daß der Flüssigkeitsstand so auf den Gaseinlaß und den Gasauslaß abgestimmt ist, daß bei geöffnetem Gaseinlaß und geöffnetem Gasauslaß die Flüssigkeit von Gas durchströmt wird. Gemäß dem zweiten Prinzip wird die Flüssigkeit in geöffnetem Zustand des Ventils nicht von Gas durchströmt. Dazu ist vorgesehen, daß zum Öffnen von mindestens einem Gaseinlaß und/oder einem Gasauslaß das Magnetfeld in einer solchen Richtung und Stärke auf die magnetische Flüssigkeit einwirkt, daß diese im Bereich des Gaseinlasses und/oder Gasauslasses verdrängt wird, so daß Gas ohne Durchströmen der Flüssigkeit direkt vom Gaseinlaß zum Gasauslaß strömen kann. Das Magnetfeld zieht dabei die Flüssigkeit an oder stößt sie ab, wobei die magnetische Flüssigkeit so verschoben werden kann, daß sie keine horizontale, sondern eine schräge Flüssigkeitsoberfläche hat.

Das erfindungsgemäße Ventil kann z.B. ein 2/2-Wege-Ventil sein. Eine Ausführungsform der Erfindung sieht weiter vor, daß zwischen dem Gaseinlaß und dem Gasauslaß ein Druckgefäß vorgesehen ist, welches zumindest teilweise mit der magnetischen Flüssigkeit gefüllt ist, in die ein Einlaßrohr hineinragt, wobei sich ein Teil des Einlaßrohres über den Flüssigkeitsstand erstreckt. Durch den sich über den Flüssigkeitsstand erstreckenden Teil des Einlaßrohres wird ein Ausströmen der Flüssigkeit aus dem Druckgefäß über das gasführende Einlaßrohr vermieden.

Das Einlaßrohr kann bogenförmig ausgebildet sein und mit seinem Einlaßende von oben her in die Flüssigkeit ragen oder sich auch zusätzlich von unten durch eine Grundfläche und einen mit Flüssigkeit gefüllten Abschnitt des Druckgefäßes bis oberhalb des Flüssigkeitsstands und von dort aus wieder nach unten in die Flüssigkeit erstrecken. Darüber hinaus ist es möglich, das Einlaßrohr durch eine Oberseite des Druckgefäßes bis in die Flüssigkeit zu führen.

Das Druckgefäß ist vorzugsweise zylindrisch oder quaderförmig ausgebildet und kann mit einem abgerundeten Unterteil versehen sein, wobei bei einer Ausführungsform der Gasauslaß an der Oberseite des Druckgefäßes vorgesehen ist.

Das Magnetfeld kann auf verschiedene Weise erzeugt werden. Gemäß einer ersten Möglichkeit kann ein zur magnetischen Flüssigkeit hin- und von dieser wegbewegbarer Permanentmagnet vorgesehen sein, der gemäß einer bevorzugten Ausführungsform zum Beispiel ringförmig das Druckgefäß umgibt und parallel zu deren Mantelfläche aus einer unbetätigten in eine betägte Stellung verschiebbar ist. In der betätigten Stellung umschließt der Permanentmagnet dabei den mit magnetischer Flüssigkeit gefüllten Teil des Druckgefäßes zumindest teilweise.

Ist der Permanentmagnet an der Mantelfläche des Druckgefäßes verschiebbar, kann ein separater Aufbau mit Parallelführungen zur Verschiebung des Permanentmagneten entfallen.

Die zweite Möglichkeit, ein Magnetfeld zu erzeugen, ist das Vorsehen eines schaltbaren Elektromagneten. Auch der Elektromagnet umschließt vorzugsweise den mit magnetischer Flüssigkeit gefüllten Teil des Druckgefäßes zumindest teilweise. Damit ist im Inneren der Spule des Elektromagneten, wo das magnetische Feld besonders stark ist, auch die magnetische Flüssigkeit angeordnet.

Bei einem Ventil mit einem abgerundeten unteren Teil kann der Magnet, der sowohl als Permanentmagnet als auch als Elektromagnet ausgebildet sein kann, stufenlos oder in mehreren Positionen arretierbar angeordnet sein, um gezielt den Gasfluß in einem oder mehreren geeignet angeordneten Ein- oder Auslässen zu unterbrechen oder zuzulassen.

Die Verwendung einer magnetischen Flüssigkeit für ein gasdurchströmtes Ventil ist nicht nur auf ein Einwegventil beschränkt, sondern durch die Erfindung werden auch ein gasdurchströmtes 3/2-Wege- und Mehrweg-Ventile geschaffen, indem mehrere zuvor beschriebene Ventile entsprechend miteinander verbundenen werden.

Weitere Merkmale und Vorteile der Erfindung ergeben sich aus der Beschreibung der nachfolgenden Zeichnungen, auf die Bezug genommen wird. In den Zeichnungen zeigen:
- Figur 1 eine schematische Darstellung eines erfindungsgemäßen, mit einem Elektromagneten ausgestatteten 2/2-Wege-Ventils in geöffnetem Zustand,
- Figur 2 das Ventil nach Figur 1 in geschlossenem Zustand,
- Figur 3 eine schematische Darstellung des erfindungsgemäßen, mit einem Permanentmagneten ausgestatteten 2/2-Wege-Ventils gemäß einer zweiten Ausführungsform in geöffnetem Zustand,
- Figur 4 das Ventil nach Figur 3 in geschlossenem Zustand,
- Figur 5 eine schematische Darstellung eines erfindungsgemäßen, mit zwei Elektromagneten ausgestatteten 3/2-Wege-Ventils in geöffnetem Zustand,
- Figur 6 das Ventil nach Figur 5 in geschlossenem Zustand,
- Figur 7 eine schematische Darstellung eines erfindungsgemäßen, mit zwei Elektromagneten ausgestatteten Ventils mit Mischfunktion in der Schaltstellung 1. Gaseinlaß geöffnet, 2. Gaseinlaß geschlossen,
- Figur 8 das Ventil nach Figur 7 in der umgekehrten Schaltstellung 1. Gaseinlaß geschlossen, 2. Gaseinlaß geöffnet,
- Figur 9 das Ventil nach den Figuren 7 und 8 in der Schaltstellung geschlossen,
- Figur 10 das Ventil nach den Figuren 7 bis 9 in der Schaltstellung geöffnet,
- Figur 11 eine schematische Darstellung eines erfindungsgemäßen, mit zwei Elektromagneten ausgestatteten Ventils gemäß einer weiteren Ausführungsform, mit Verteilerfunktion in der Schaltstellung 1. Gasauslaß geöffnet, 2. Gasauslaß geschlossen,
- Figur 12 das Ventil nach Figur 11 in der Schaltstellung 1. Gasauslaß geschlossen, 2. Gasauslaß geöffnet,
- Figur 13 das Ventil nach den Figuren 11 und 12 in der Schaltstellung geschlossen,
- Figur 14 das Ventil nach den Figuren 11 bis 13 in der Schaltstellung geöffnet,
- Figur 15 in Seitenansicht und Draufsicht eine schematische Darstellung eines erfindungsgemäßen, mit einem Elektromagneten ausgestatteten Mehrwege-Ventils gemäß einer zusätzlichen Ausführungsform in teilweise geschlossenem Zustand,
- Figur 16 in Seitenansicht und Draufsicht das Ventil nach Figur 15 im Zustand alle Gaseinlässe geöffnet,
- Figur 17 in Seitenansicht und Draufsicht eine schematische Darstellung eines erfindungsgemäßen, mit einem Elektromagneten ausgestatteten weiteren Mehrwege-Ventils mit einem Einfüllrohr, über das der Flüssigkeitsstand der magnetischen Flüssigkeit regelbar ist, in teilweise geschlossenem Zustand, und
- Figur 18 in Seitenansicht und Draufsicht das Ventil nach Figur 17 im Zustand alle Gaseinlässe geöffnet.

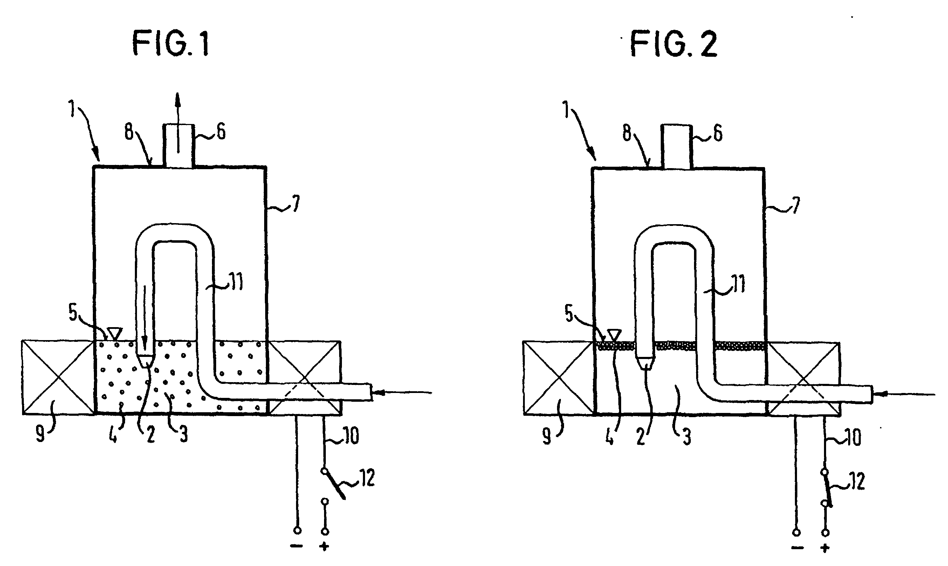

Die Figuren 1 bis 4 zeigen ein gasdurchströmtes Ventil 1, welches als 2/2-Wege-Ventil ausgebildet ist.

Gemäß einer ersten, in den Figuren 1 und 2 gezeigten Ausführungsform ist ein zylinderförmiges Druckgefäß 7 vorgesehen, welches teilweise mit einer magnetischen Flüssigkeit 3 gefüllt ist. Außerhalb des Druckgefäßes 7 umgibt ein Elektromagnet 9 in Form einer Spule den mit Flüssigkeit gefüllten Teil des Druckgefäßes 7. Der Elektromagnet 9 ist über Leitungen 10 mit einer Spannungsquelle verbunden, wobei die Verbindung je nach Stellung eines Schalters 12 hergestellt oder unterbrochen sein kann. Die Zylinderform des Druckgefäßes erlaubt eine fertigungstechnisch einfache Ausführung des Ventils 1 samt seines Elektromagneten 9, der das Druckgefäß 7 ringförmig umschließt und an es angrenzt.

Ein Einlaßrohr 11 erstreckt sich durch eine Öffnung in der Mantelfläche des Druckgefäßes 7 in die magnetische Flüssigkeit 3 und weiter bogenförmig über den Flüssigkeitsstand 5, um schließlich mit seinem Gaseinlaß 2 von oben her in die Flüssigkeit 3 zu ragen. Dadurch, daß sich ein Teil des Einlaßrohres 11 über den Flüssigkeitsstand 5 erhebt, kann keine magnetische Flüssigkeit 3 über das Einlaßrohr 11 aus dem Druckgefäß 7 ausströmen. Ein Gasauslaß 6 befindet sich an der Oberseite 8 des Druckgefäßes 7.

Die Wirkungsweise des Ventils 1 wird nun anhand der Figuren 1 und 2 erläutert. In Figur 1 ist der Schalter 12 in offenem Zustand, das heißt, daß der Elektromagnet 9 nicht an die Spannungsquelle angeschlossen ist und kein Magnetfeld erzeugt. In diesem Zustand liegt die magnetische Flüssigkeit 3 in der flüssigen Phase vor, wobei nichtmagnetische Partikel 4 in der magnetischen Flüssigkeit 3 feinst verteilt sind. Als Dispersionsträger für die vorhandenen magnetischen Partikel in der magnetischen Flüssigkeit 3 wird Wasser verwendet. Da die magnetische Flüssigkeit 3 gemäß Figur 1 in ihrer flüssigen Phase vorliegt, kann Gas über das Einlaßrohr 11 und den Gaseinlaß 2 durch die Flüssigkeit 3 strömen. Der Bereich des Inneren des Druckgefäßes 7, der nicht mit Flüssigkeit 3 gefüllt ist, wird mit Gas gefüllt, welches über den Gasauslaß 6 zu einem Verbraucher strömen kann.

Soll das Ventil 1 geschlossen werden, muß auch der Schalter 12, wie in Figur 2 gezeigt, geschlossen werden, so daß der Elektromagnet 9 ein Magnetfeld erzeugt, welches auf die magnetische Flüssigkeit 3 wirkt. Das Magnetfeld ist dabei so stark, daß eine Viskositätsänderung der magnetischen Flüssigkeit 3 und ein Phasenübergang von flüssig nach fest erfolgt. Die in der magnetischen Flüssigkeit 3 vorhandenen nichtmagnetischen Partikel, vorzugsweise in Form von Elastomeren, sind derart gewählt, daß sie in diesem Zustand einen magnetischen Auftrieb in der Flüssigkeit 3 erhalten und an den Flüssigkeitsstand 5 gedrängt und dort zusammengepreßt werden, wo sie eine zusätzliche Sperrschicht bilden. Die erstarrte magnetische Flüssigkeit 3 erlaubt kein Durchströmen von Gas und unterbricht den Gasfluß vollständig.

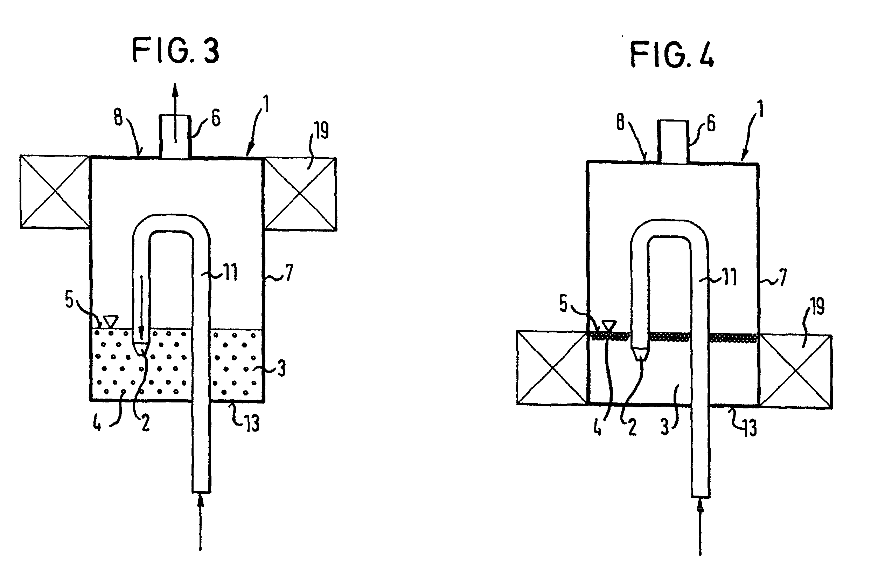

Die in den Figuren 3 und 4 gezeigte weitere Ausführungsform entspricht im wesentlichen der bislang erläuterten Ausführungsform, wobei jedoch anstatt des Elektromagneten 9 ein Permanentmagnet 19 vorgesehen ist, der an der Mantelfläche des Druckgefäßes 7 vertikal verschiebbar angeordnet ist, so daß die Mantelfläche die Lagerung für den Permanentmagneten 19 darstellt. Das Einlaßrohr 11 erstreckt sich im Gegensatz zur vorbeschriebenen Ausführungsform von unten durch eine Grundfläche 13 des Druckgefäßes 7 in dessen Inneres.

In der in Figur 3 gezeigten offenen Stellung des Ventils 1 ist der Permanentmagnet 19 im oberen Bereich des Druckgefäßes 7 angeordnet. Das von ihm erzeugte Magnetfeld ist dabei so weit von der magnetischen Flüssigkeit 3 entfernt, daß es zu schwach ist, um die in Figur 3 in flüssiger Phase vorliegende Flüssigkeit 3 in die feste Phase zu überführen oder sie in Bereiche mit stärkerem Magnetfeld zu ziehen.

Wird jedoch der Permanentmagnet 19 gemäß Figur 4 nach unten geschoben, so daß er den mit Flüssigkeit 3 gefüllten Teil des Druckgefäßes 7 umschließt, gehen die in Zusammenhang mit Figur 2 erläuterten Abläufe in der Flüssigkeit 3 vonstatten, und das Ventil 1 nimmt seine geschlossene Stellung ein. Die in der Flüssigkeit 3 ebenfalls vorhandenen Tenside wirken grenzflächenaktiv und verhindern, daß sich eine Art Klumpenbildung aus nichtmagnetischen Partikeln ergibt.

Es ist auch möglich, Ventile 1 auszubilden, in denen Elektromagnete 9 und zusätzlich Permanentmagnete 19 vorhanden sind.

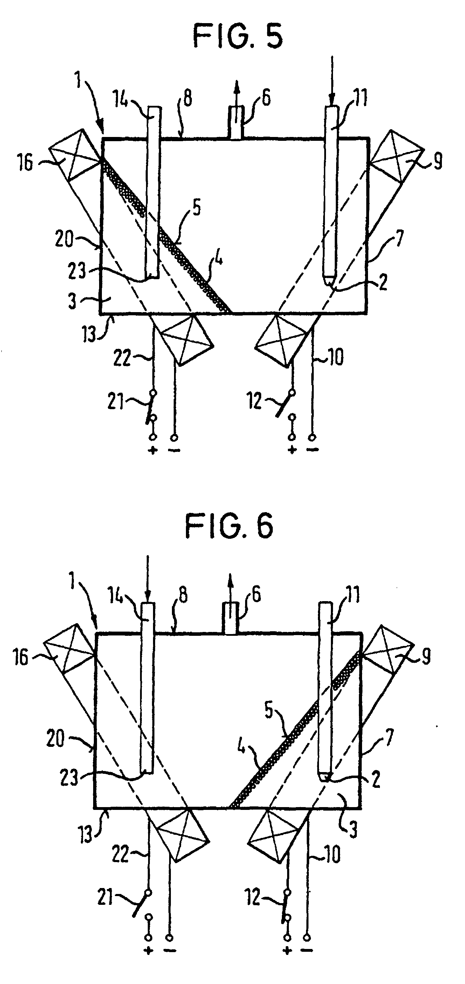

Die Figuren 5 und 6 zeigen ein gasdurchströmtes Ventil 1, das als 3/2-Wege-Ventil ausgebildet ist.

Gemäß dieser Ausführungsform ist ein zylinderförmiges Druckgefäß 7 vorgesehen, das teilweise mit einer magnetischer Flüssigkeit 3 gefüllt ist. In diese magnetische Flüssigkeit 3 ragen von oben durch Öffnungen in der Oberseite 8 des Druckgefäßes 7 ein Einlaßrohr 11 mit einem Gaseinlaß 2 und ein Entlüftungsrohr 14 hinein. Ein Gasauslaß 6 befindet sich an der Oberseite 8 des Druckgefäßes 7.

Außerhalb des Druckgefäßes 7 sind zwei Elektromagneten 9, 16 in Form von Spulen derart angeordnet, daß einer den Bereich des Gaseinlasses 2 umschließt, der zweite den Bereich des Gaseinlasses 23. Die Elektromagneten 9 und 16 sind über Leitungen 10 beziehungsweise 22 mit in der Zeichnung nicht dargestellten Spannungsquellen verbunden, wobei die Stromkreise je nach Stellung der Schalter 12, 21 geschlossen oder unterbrochen sein können. Zwei der vier möglichen Schaltstellungen der Schalter 12, 21 werden zur Realisierung des 3/2-Wege-Ventils benutzt, nämlich die Schaltstellung Schalter 12 geöffnet, Schalter 21 geschlossen (Fig. 5) und die Schaltstellung Schalter 12 geschlossen, Schalter 21 geöffnet (Fig. 6).

Die Wirkungsweise des 3/2-Wege-Ventils wird nun anhand der Figuren 5 und 6 erläutert. In Fig. 5 ist der Stromkreis des Elektromagneten 16 geschlossen, d.h., daß der Elektromagnet 16 ein Magnetfeld erzeugt, das die magnetische Flüssigkeit 3 in den Bereich des Gaseinlasses 23 zieht und dieses dort von der flüssigen in die feste Phase übergeht. Auch in diesem Fall werden wie in Fig. 2 die in der flüssigen Phase verteilten nichtmagnetischen Partikel 4 vom Magnetfeld nach außen, d.h. an die Flüssigkeitsoberfläche, die durch den schräg verlaufenden Flüssigkeitsstand 5 dargestellt ist, gedrängt, wo sie eine zusätzliche Sperrschicht bilden. Die erstarrte magnetische Flüssigkeit 3 erlaubt kein Durchströmen von Gas und dichtet das Entlüftungsrohr 14 vollkommen ab. Zwischen Einlaßrohr 11 und Gasauslaß 6 kann das Gas ungehindert fließen, das Ventil 1 ist offen.

In der in Fig. 6 gezeigten Stellung ist der Stromkreislauf des Elektromagneten 9 über den Schalter 12 geschlossen, wogegen der Stromkreis des Elektromagneten 16 durch den Schalter 21 unterbrochen ist. Der Elektromagnet 9 erzeugt ein Magnetfeld, das die magnetische Flüssigkeit 3 in den Bereich des Gaseinlasses 2 zieht, so daß diese dort von der flüssigen in die feste Phase übergeht. Wie in der in Fig. 5 gezeigten Schaltungstellung besteht auch hier die Sperrschicht aus nichtmagnetischen Partikeln 3. Der Gaszufluß durch das Einlaßrohr 11 wird vollständig unterbrochen, das Ventil 1 ist geschlossen. Zwischen Gasauslaß 6 und Entlüftungsrohr 14 kann aber Gas durch das Druckgefäß 7 fließen, d.h. das Ventil 1 wird entlüftet.

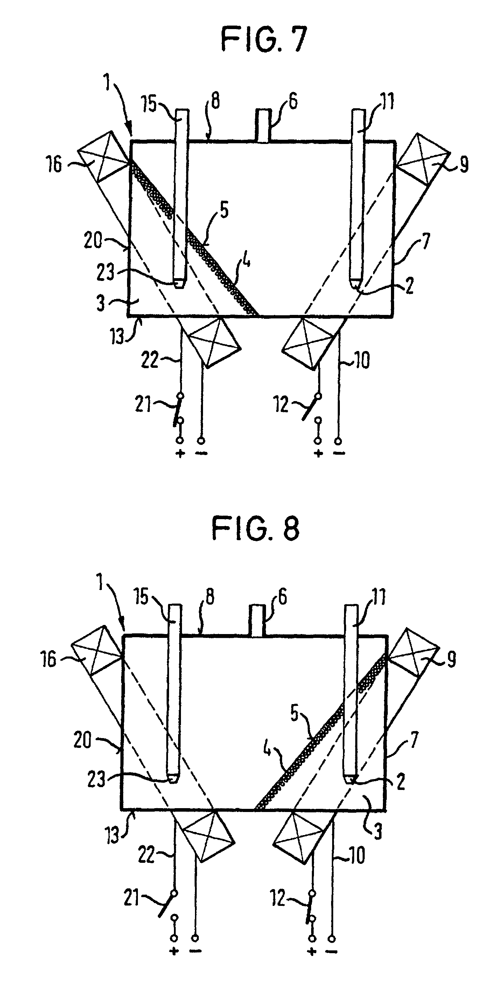

Die in den Figuren 7 bis 10 gezeigte Ausführungsform entspricht im wesentlichen der in den Figuren 5 und 6 erläuterten Ausführungsform, wobei jedoch anstatt des Entlüftungsrohres 14 ein zweites Einlaßrohr 15 von oben in die magnetische Flüssigkeit 3 ragt.

Die beiden Einlaßrohre 11, 15 können abwechselnd durch ein jeweils zugeordnetes Magnetfeld gechlossen beziehungsweise geöffnet werden oder gemeinsam geschaltet werden. Es entsteht ein Ventil 1 mit Mischfunktion.

Gemäß Fig. 7 ist das Einlaßrohr 15 durch die Wirkung des Magnetfeldes des Elektromagneten 16 geschlossen. Zwischen dem Einlaßrohr 11 und dem Gasauslaß 6 kann Gas ungehindert fließen.

Fig. 8 zeigt die umgekehrte Funktion. In diesem Fall ist das Einlaßrohr 11 durch die Wirkung des Magnetfeldes des Elektromagneten 9 geschlossen und zwischen Einlaßrohr 15 und Gasauslaß 6 kann ungehindert Gas fließen.

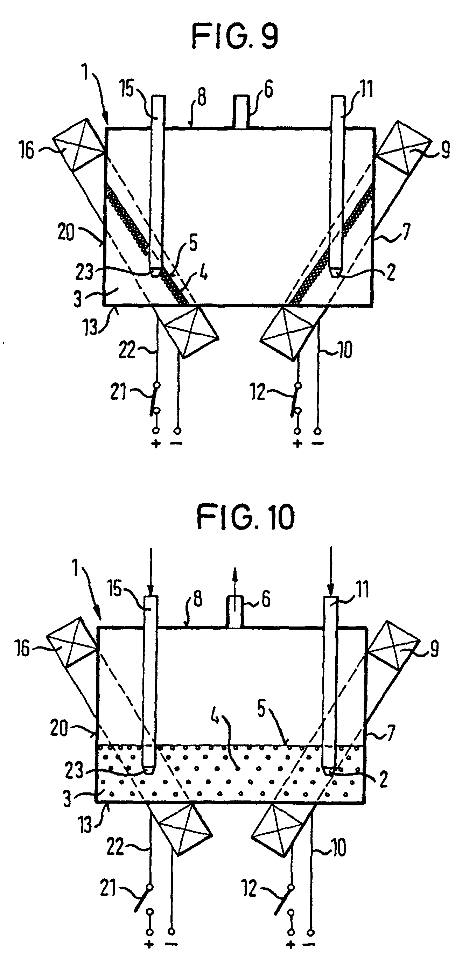

In Fig. 9 sind die Stromkreise beider Elektromagneten 9, 16 geschlossen. Durch die Wirkung der Magnetfelder wird die magnetische Flüssigkeit 3 jeweils zu den Einlaßrohren 11 und 15 gezogen und diese dichtet durch die zuvor beschriebenen Abläufe in der magnetischen Flüssigkeit 3 die Gaseinlässe 2 und 23 vollständig ab, das Ventil 1 ist geschlossen. Ein Teil der Flüssigkeit 3 wird zur linken Seite des Druckgefäßes 7 gedrängt, um bei einer schräg verlaufenden, gasdichten Flüssigkeitsoberfläche 5 den Gaseinlaß 23 zu schließen. Der übrige andere Teil der Flüssigkeit 3 wird zur rechten Seite des Druckgefäßes 7 gedrängt, um dort bei einer schräg verlaufenden, gasdichten Flüssigkeitsoberfläche den Gaseinlaß 2 zu schließen.

In Fig. 10 sind die Schalter 12 und 21 offen, d.h., daß die Elektromagneten 9 und 16 keine Magnetfelder erzeugen. Die magnetische Flüssigkeit 3 liegt in der flüssigen Phase vor und läßt Gase aus beiden Gaseinlässen 2, 23 zum Gasauslaß 6 strömen.

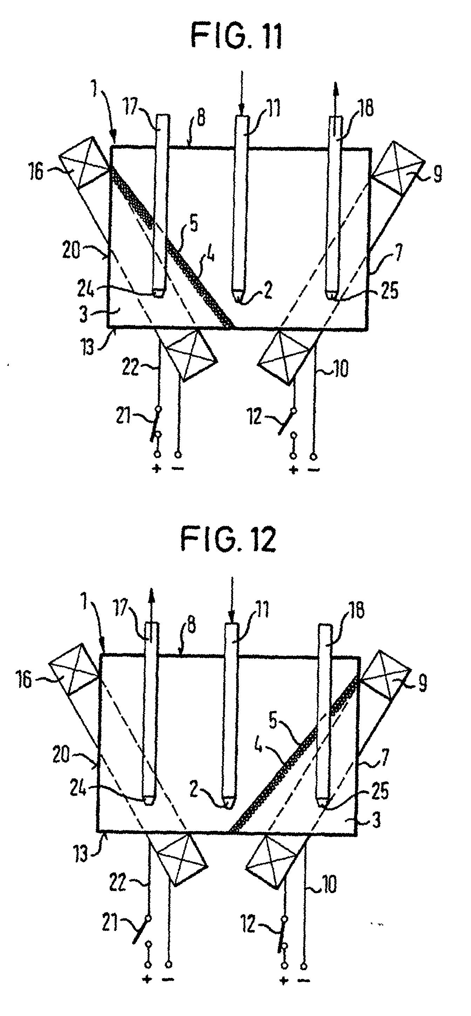

Die Figuren 11 bis 14 zeigen eine Ausführungsform, die im wesentlichen der in den Figuren 7 bis 10 dargestellten Ausführungsform entspricht. Durch die geänderte Anordnung entsteht ein Ventil 1 mit Verteilerfunktion. In diesem Fall ist das Einlaßrohr 11 zwischen zwei Auslaßrohren 17, 18 angeordnet, so daß im Fall, daß kein Magnetfeld anliegt, der Gaseinlaß 2 und Enden 24 und 25 der Auslaßrohre 17 beziehungsweise 18 in die magnetische Flüssigkeit 3 hineinragen.

In Fig. 11 ist durch Schließen des Schalters 21 der Stromkreis des Elektromagneten 16 geschlossen. Der Stromkreis des Elektromagneten 9 hingegen ist geöffnet. Der Elektromagnet 16 erzeugt ein Magnetfeld im Bereich des Endes 24. Durch die Wirkung des Magnetfeldes wird die magnetische Flüssigkeit 3 in diesen Bereich gezogen und erstarrt dort. Die oben genannten inneren Abläufe dichten den Gasauslaß 17 vollständig ab, wogegen Gas vom Einlaßrohr 11, ohne durch magnetische Flüssigkeit strömen zu müssen, über das Auslaßrohr 18 aus dem Druckgefäß 7 strömen kann.

Fig. 12 zeigt die umgekehrte Funktion des Ventils 1. Hier wird durch das vom Elektromagneten 9 erzeugte Magnetfeld das Auslaßrohr 18 abgesperrt. Vom Einlaßrohr 11 kann Gas über das Auslaßrohr 17 aus dem Druckgefäß 7 strömen.

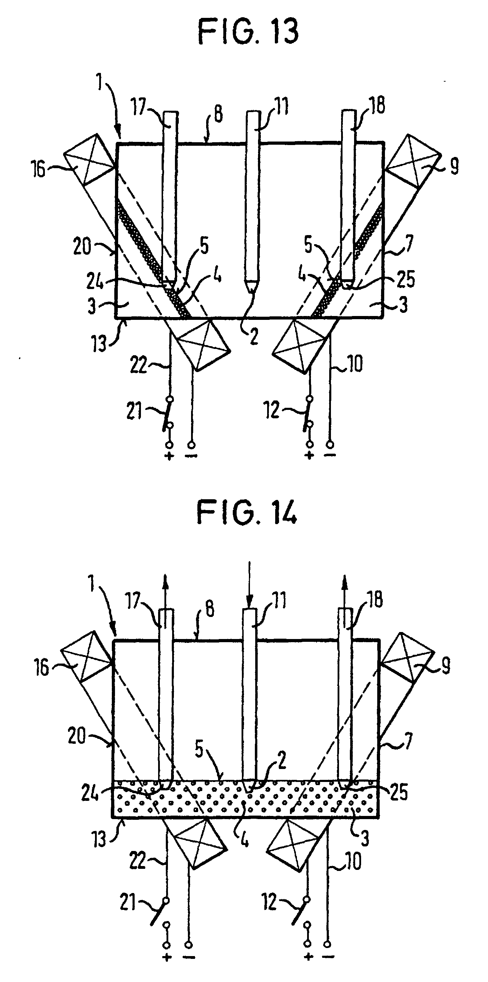

In Fig. 13 sind die Schalter 12 und 21 geschlossen. Die Elektromagneten 9 und 16 erzeugen Magnetfelder, die die magnetische Flüssigkeit 3 in die Bereiche der Enden 24 und 25 ziehen und diese geht in die feste Phase über. Die beiden Auslaßrohre 17 und 18 werden durch die bereits beschriebenen inneren Abläufe in der magnetischen Flüssigkeit 3 vollständig abgesperrt, das Ventil 1 ist in Sperrfunktion.

In Fig. 14 sind die Stromkreise der Elektromagneten 9 und 16 geöffnet, so daß kein Magnetfeld auf die magnetische Flüssigkeit 3 wirkt. Wie in Fig. 1 beschrieben, kann Gas vom Einlaßrohr 11 durch die Flüssigkeit 3 und die Auslaßrohre 17, 18 strömen. In diesem Fall wird das Gas auf beide Auslaßrohre 17 und 18 verteilt.

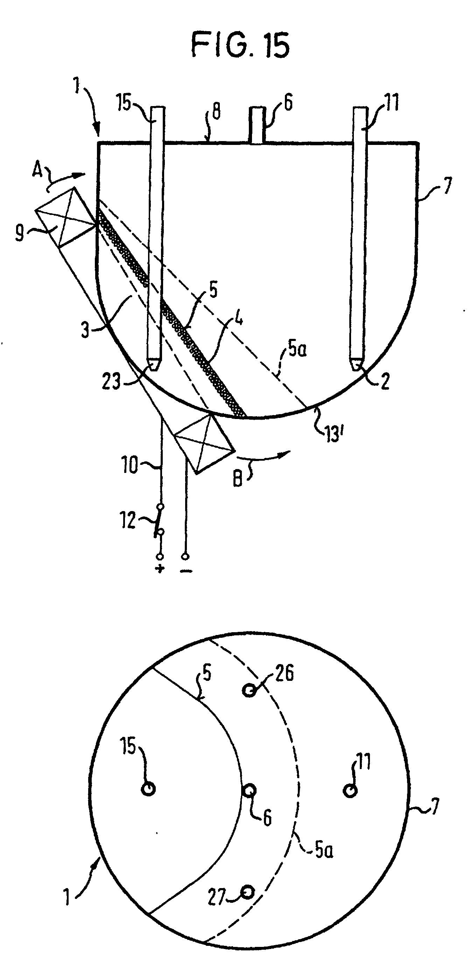

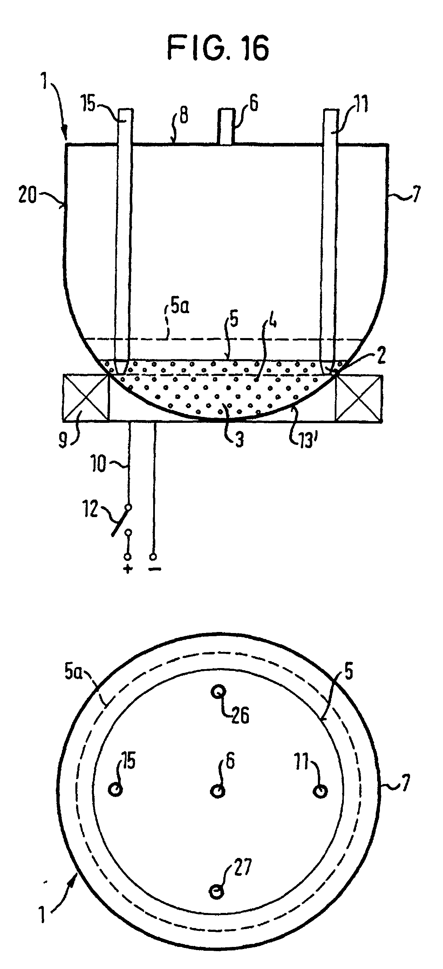

Die Figuren 15 und 16 zeigen eine weitere Ausführungsform eines Ventils 1, das als Mehrwegventil mit Mischfunktion ausgebildet ist und vier Einlaßrohre 11, 15, 26 und 27 und einen Gasauslaß 6 aufweist. Die Arbeitsweise des Ventils 1 entspricht im wesentlichen der des in den Figuren 7 bis 10 erläuterten Ventils 1. Das Absperren oder Öffnen einzelner Einlaßrohre 11, 15, 26, 27 erfolgt mittels des Elektromagneten 9, der an dem halbkugelförmigen unteren Teil 13' des Ventils 1 um die vertikale Längsachse des Druckgefäßes 7 horizontal (vgl. Pfeil A) drehbar und/oder um das untere Ende des halbkugelförmigen Teiles 13' pendelnd (vgl. Pfeil B) verschiebbar ist. Die entsprechende Führung des Elektromagneten 9 ist nicht dargestellt. Der Elektromagnet 9 ist in mehreren Positionen oder sogar stufenlos arretierbar. Anstatt des Elektromagneten 9 kann auch ein Permanentmagnet vorgesehen sein.

Gemäß Fig. 15 ist der ringförmige Elektromagnet 9 durch eine nicht dargestellte Führung derart verschiebbar gelagert, daß sein Magnetfeld nur den Bereich eines Gaseinlasses 2 erreicht. Durch die Wirkung des Magnetfeldes sperrt die erstarrte magnetische Flüssigkeit 3 das Einlaßrohr 15 ab. Wird der Flüssigkeitsstand 5 durch Nachfüllen von Flüssigkeit 3 über ein nicht gezeigtes Einfüllrohr auf den Flüssigkeitsstand 5a gebracht, werden abhängig vom Flüssigkeitsstand 5a der magnetischen Flüssigkeit 3 und der Stellung des Elektromagneten 9 weitere Einlaßrohre gesperrt, im Beispiel die Einlaßrohre 26 und 27.

In der in Figur 16 gezeigten Stellung erstreckt sich der Elektromagnet 9 um den unteren Teil 13' des Ventils 1. In dieser waagrechten Grundstellung liegen alle unteren Rohrenden der Einlaßrohre 11, 15, 26 und 27 im Bereich seines Magnetfeldes. Der Schalter 12 des Stromkreises ist geöffnet, und es wirkt kein Magnetfeld auf die magnetische Flüssigkeit 3. Wie zuvor beschrieben, kann in diesem Fall Gas aus den Einlaßrohren 11, 15, 26 und 27 durch die magnetische Flüssigkeit 3 und durch den Gasauslaß 6 aus dem Druckgefäß 7 strömen, da das Ventil 1 vollständig geöffnet ist. Wird jedoch der Schalter 12 in dieser Grundstellung des Elektromagneten 9 geschlossen, erstarrt durch die bereits beschriebene Wirkung des Magnetfeldes des Elektromagneten 9 die magnetische Flüssigkeit 3 und dichtet alle Einlaßrohre 11, 15, 26 und 27 ab, so daß das Ventil 1 vollständig gesperrt ist.

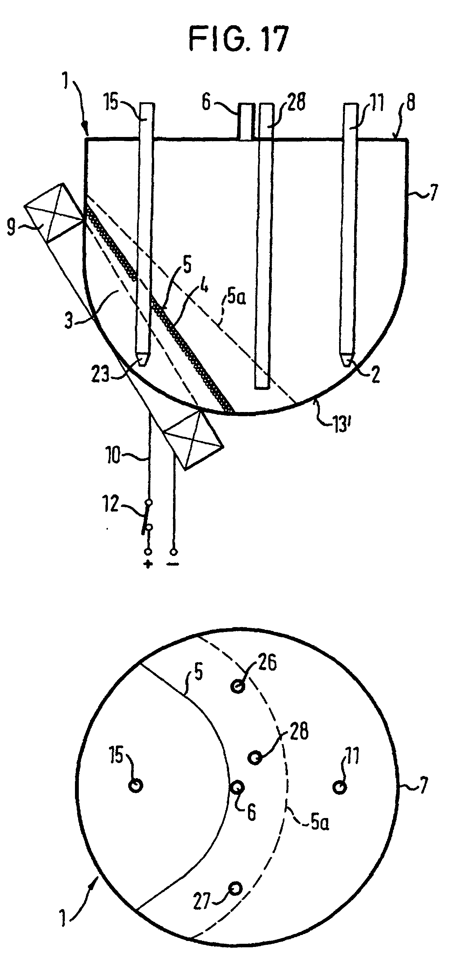

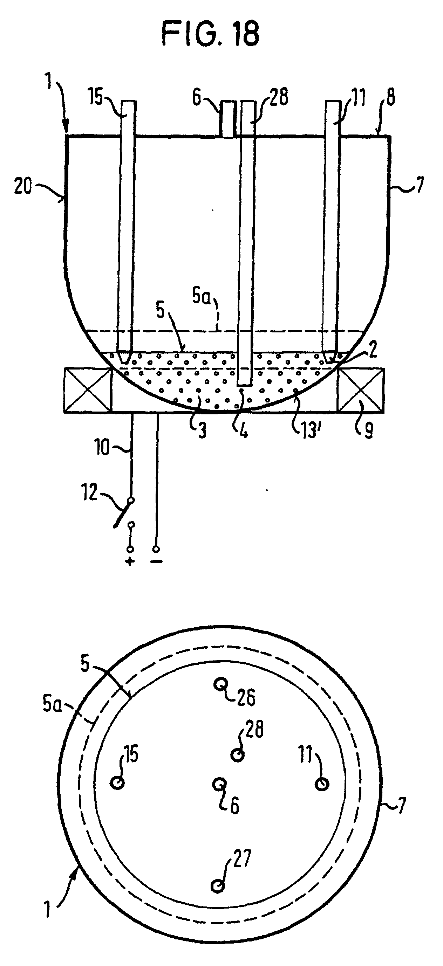

Die Figuren 17 und 18 zeigen das gasdurchströmte Ventil 1 wie es bereits anhand der Figuren 15 und 16 erläutert worden ist. Zur Veränderung des Flüssigkeitsstandes 5 wird ein gasabdichtbares Einfüllrohr 28 von oben durch die Oberseite 8 des Druckgefäßes 7 so weit nach unten geführt, daß es in der waagrechten Grundstellung des Magneten 9 in die magnetische Flüssigkeit 3 hineinragt. Das Einfüllrohr 28 ist mit einem nicht dargestellten Pumpsystem verbunden und ermöglicht eine stetige Funktionsänderung des Ventils 1. Je nach Stellung des Elektromagneten 9 und der Füllhöhe 5 werden so ein, zwei oder drei Einlaßrohre abgedichtet.

Es ist auch möglich, Ventile auszubilden, in denen Elektromagnete 9 und zusätzlich Permanentmagnete 19 vorhanden sind.

Die zuvor beschriebenen Mehrweg-Ventile sind dadurch gekennzeichnet, daß sie mit einem einzigen Druckgefäß auskommen, da die magnetische Flüssigkeit in ein starkes Magnetfeld hineingezogen wird, so daß bestimmte Einlaß- oder Auslaßrohre geöffnet oder geschlossen werden können. Darüber hinaus können jedoch auch Mehrweg-Ventile durch mehrere der zuvor beschriebenen Ventile entstehen, die über entsprechende Bohrleitungen miteinander verbunden und geschaltet werden.

Zusätzlich kann vor jedem Schalter 12, 21 ein Potentiometer angeordnet sein, durch das die an den Elektromagneten 9 angelegte Stromstärke stetig verändert werden kann. Durch Veränderung der Stromstärke ändert sich wiederum die Viskosität der magnetischen Flüssigkeit 3, so daß die Zähigkeit der magnetischen Flüssigkeit 3 stufenlos verstellbar ist und mehr oder weniger Gas durch das Ventil 1 strömt. Damit ergibt sich ein stufenlos einstellbares Ventil.

## Patentansprüche

1. Gasdurchströmtes Ventil mit mindestens einem Gaseinlaß (2) und mindestens einem Gasauslaß (6), bei dem im Strömungsweg zwischen Gaseinlaß (2, 23) und Gasauslaß (6) im Ventil (1) eine magnetische Flüssigkeit (3) vorgesehen ist, die bei angelegtem Magnetfeld erstarrt und den Strömungsweg von mindestens einem Gaseinlaß (2, 23) zu einem oder mehreren Gasauslässen (6) gasdicht unterbricht und ohne angelegtes Magnetfeld von Gas durchströmbar ist, **dadurch gekennzeichnet, daß** in der magnetischen Flüssigkeit (3) nichtmagnetische Partikel (4) vorhanden sind.

2. Ventil nach Anspruch 1, **dadurch gekennzeichnet, daß** in der magnetischen Flüssigkeit (3) para- und diamagnetische Metallpartikel und/oder als nichtmagnetische Partikel (4) Elastomere vorhanden sind.

3. Gasdurchströmtes Ventil mit mindestens einem Gaseinlaß (2) und mindestens einem Gasauslaß (6), bei dem im Strömungsweg zwischen Gaseinlaß (2, 23) und Gasauslaß (6) im Ventil (1) eine magnetische Flüssigkeit (3) vorgesehen ist, die bei angelegtem Magnetfeld erstarrt und den Strömungsweg von mindestens einem Gaseinlaß (2, 23) zu einem oder mehreren Gasauslässen (6) gasdicht unterbricht und ohne angelegtes Magnetfeld von Gas durchströmbar ist, **dadurch gekennzeichnet, daß** in der magnetischen Flüssigkeit (3) Tenside vorhanden sind.

4. Ventil nach einem der vorstehenden Ansprüche, **dadurch gekennzeichnet, daß** der Flüssigkeitsstand (5, 5a) so auf den Gaseinlaß (2, 23) und den Gasauslaß (6) abgestimmt ist, daß die Flüssigkeit (3) bei geöffnetem Gaseinlaß (2, 23) und geöffnetem Gasauslaß (6) von Gas durchströmt wird.

5. Ventil nach einem der vorstehenden Ansprüche, **dadurch gekennzeichnet, daß** das Magnetfeld zum Öffnen von mindestens einem Gaseinlaß (2, 23) und/oder einem Gasauslaß (6) in einer solchen Richtung und Stärke auf die Flüssigkeit (3) einwirkt, daß diese im Bereich des Gaseinlasses (2, 23) und/oder des Gasauslasses (6) verdrängt wird, so daß Gas ohne Durchströmen der Flüssigkeit (3) direkt vom Gaseinlaß (2, 23) zum Gasauslaß (6) strömen kann.

6. Ventil nach einem der vorstehenden Ansprüche, **dadurch gekennzeichnet, daß** das Ventil ein 2/2-Wege-Ventil ist.

7. Ventil nach einem der Ansprüche 1 bis 5, **dadurch gekennzeichnet, daß** das Ventil ein Mehrweg-Ventil ist.

8. Ventil nach einem der vorstehenden Ansprüche, **dadurch gekennzeichnet, daß** zwischen dem Gaseinlaß (2, 23) und dem Gasauslaß (6) ein Druckgefäß (7) vorgesehen ist, das zumindest teilweise mit der magnetischen Flüssigkeit (3) gefüllt ist, in die mindestens ein Einlaßrohr (11, 15, 26, 27) hineinragt, wobei sich ein Teil des Einlaßrohres (11, 15, 26, 27) über den Flüssigkeitsstand (5) erstreckt.

9. Ventil nach Anspruch 8, **dadurch gekennzeichnet, daß** das Einlaßrohr (11) bogenförmig ausgebildet ist und sein Einlaßende (2) von oben her in die Flüssigkeit (3) ragt.

10. Ventil nach Anspruch 9, **dadurch gekennzeichnet, daß** sich das Einlaßrohr (11) von unten durch eine Grundfläche (13) und einen mit magnetischer Flüssigkeit (3) gefüllten Abschnitt des Druckgefäßes (7) bis oberhalb des Flüssigkeitsstands (5) und von dort nach unten in die Flüssigkeit (3) erstreckt.

11. Ventil nach Anspruch 9 oder 10, **dadurch gekennzeichnet, daß** sich mindestens ein Einlaßrohr (11, 15, 26, 27) von oben durch eine Oberseite (8) des Druckgefäßes (7) bis in die Flüssigkeit (3) erstreckt.

12. Ventil nach einem der vorstehenden Ansprüche, **dadurch gekennzeichnet, daß** das Druckgefäß (7) zylindrisch oder quaderförmig ist.

13. Ventil nach einem der vorstehenden Ansprüche, **dadurch gekennzeichnet, daß** der untere Teil (13') des Druckgefäßes (7) abgerundet ist.

14. Ventil nach einem der vorstehenden Ansprüche, **dadurch gekennzeichnet, daß** der Gasauslaß (6) an der Oberseite (8) des Druckgefäßes (7) vorgesehen ist.

15. Ventil nach Anspruch 14, **dadurch gekennzeichnet, daß** der Gasauslaß mindestens ein Auslaßrohr (17, 18) mit einem Ende (24, 25) umfaßt, das von oben in die magnetische Flüssigkeit (3) hineinragt.

16. Ventil nach einem der vorstehenden Ansprüche, **dadurch gekennzeichnet, daß** ein Entlüftungsrohr (14) von oben in die magnetische Flüssigkeit (3) hineinragt.

17. Ventil nach einem der vorstehenden Ansprüche, **dadurch gekennzeichnet, daß** ein zur magnetischen Flüssigkeit (3) hin- und von dieser wegbewegbarer Permanentmagnet (19) zum Aufbringen eines Magnetfeldes vorgesehen ist.

18. Ventil nach Anspruch 17, **dadurch gekennzeichnet, daß** der Permanentmagnet (19) das Druckgefäß (7) ringförmig umschließt und parallel zu deren Mantelfläche (20) aus einer unbetätigten in eine betätigte Stellung verschiebbar ist, in welcher er den mit der magnetischen Flüssigkeit (3) gefüllten Teil des Druckgefäßes (7) zumindest teilweise umschließt.

19. Ventil nach Anspruch 18, **dadurch gekennzeichnet, daß** der Permanentmagnet (19) an der Mantelfläche (20) des Druckgefäßes (7) verschiebbar ist.

20. Ventil nach einem der vorstehenden Ansprüche, **dadurch gekennzeichnet, daß** mehrere Permanentmagnete gegenüberliegend angeordnet sind, so daß ihr Magnetfeld jeweils auf die Flüssigkeit (3) im Bereich mindestens eines Einlaßrohres (11, 15, 26, 27) oder mindestens eines Auslaßrohres (17, 18) wirkt.

21. Ventil nach Anspruch 20, **dadurch gekennzeichnet, daß** Permanentmagnete auf einer Führung zu dem Druckgefäß hin- und von ihm wegbewegbar sind.

22. Ventil nach einem der vorstehenden Ansprüche, **dadurch gekennzeichnet, daß** mindestens ein schaltbarer Elektromagnet (9, 19) vorgesehen ist.

23. Ventil nach Anspruch 22, **dadurch gekennzeichnet, daß** der Elektromagnet (9, 19) den mit magnetischer Flüssigkeit (3) gefüllten Teil des Druckgefäßes (7) zumindest teilweise umschließt.

24. Ventil nach Anspruch 13 und Anspruch 22 oder 23, **dadurch gekennzeichnet, daß** der Elektromagnet (9) am abgerundeten unteren Teil (13') des Druckgefäßes (7) verschiebbar ist.

25. Ventil nach einem der Ansprüche 22 bis 24, **dadurch gekennzeichnet, daß** mehrere Elektromagnete (9, 16) gegenüberliegend angeordnet sind, so daß ihr Magnetfeld jeweils im Bereich mindestens eines Einlaßrohres (11) oder mindestens eines Auslaßrohres (17) wirkt.

26. Ventil nach einem der Ansprüche 22 bis 25, **dadurch gekennzeichnet, daß** die Elektromagnete (9, 16) getrennt oder gemeinsam geschaltet werden.

27. Ventil nach einem der Ansprüche 22 bis 26, **dadurch gekennzeichnet, daß** durch Anlegen einer stetig veränderlichen Stromstärke an den mindestens einen Elektromagneten (9, 19) die Viskosität der magnetischen Flüssigkeit (3) stetig verändert werden kann, so daß je nach Zähigkeit der magnetischen Flüssigkeit (3) mehr oder weniger Gas fließt, wodurch ein stufenlos einstellbares Ventil (1) entsteht.

28. Ventil nach einem der vorstehenden Ansprüche, **dadurch gekennzeichnet, daß** der Flüssigkeitsstand (5, 5a) des Druckgefäßes (7) verändert werden kann.

29. Ventil nach Anspruch 28, **dadurch gekennzeichnet, daß** über ein in die Flüssigkeit (3) von oben hineinragendes, gegen Gasdurchfluß abdichtbares Einfüllrohr (28) der Flüssigkeitsstand (5, 5a) beliebig veränderbar ist.

30. Gasdurchströmtes Mehrweg-Ventil, **dadurch gekennzeichnet, daß** das Mehrweg-Ventil aus mehreren entsprechend miteinander verbundenen und schaltbaren gasdurchströmten Ventilen (1) nach einem der Ansprüche 1 bis 29 gebildet ist.

## Claims

1. A gas flow valve comprising at least one gas inlet (2) and at least one gas outlet (6) and in which a magnetic fluid (3) is provided in the valve (1) in the flow path between the gas inlet (2, 23) and the gas outlet (6), the magnetic fluid (3) solidifying upon application of a magnetic field and interrupting the flow path from at least one gas inlet (2, 23) to one or more gas outlets (6) so as to make it gas-tight, and permitting gas flow therethrough when no magnetic field is applied, **characterized in that** non-magnetic particles (4) are present in the magnetic fluid (3).

2. The valve as set forth in claim 1, **characterized in that** paramagnetic and diamagnetic metal particles and/or as non-magnetic particles (4), elastomers are present in the magnetic fluid (3).

3. A gas flow valve comprising at least one gas inlet (2) and at least one gas outlet (6) and in which a magnetic fluid (3) is provided in the valve (1) in the flow path between the gas inlet (2, 23) and the gas outlet (6), the magnetic fluid (3) solidifying upon application of a magnetic field and interrupting the flow path from at least one gas inlet (2, 23) to one or more gas outlets (6) so as to make it gas-tight, and permitting gas flow therethrough when no magnetic field is applied, **characterized in that** tensides are present in the magnetic fluid (3).

4. The valve as set forth in any of the preceding claims, **characterized in that** the fluid level (5, 5a) is adapted to the gas inlet (2, 23) and the gas outlet (6) such that when the gas inlet (2, 23) and the gas outlet (6) are open, gas flows through the fluid (3).

5. The valve as set forth in any of the preceding claims, **characterized in that** for opening at least one gas inlet (2, 23) and/or one gas outlet (6), the magnetic field acts on the fluid (3) in such a direction and strength that the fluid (3) is displaced in the area of the gas inlet (2, 23) and/or the gas outlet (6), so that gas is able to flow directly from the gas inlet (2, 23) to the gas outlet (6) without flowing through the fluid (3).

6. The valve as set forth in any of the preceding claims, **characterized in that** the valve is a 2/2-way valve.

7. The valve as set forth in any of claims 1 to 5, **characterized in that** the valve is a multiway valve.

8. The valve as set forth in any of the preceding claims, **characterized in that** between the gas inlet (2, 23) and the gas outlet (6) a pressure vessel (7) is provided which is filled at least in part with the magnetic fluid (3) into which at least one inlet tube (11, 15, 26, 27) protrudes, part of the inlet tube (11, 15, 26, 27) extending above the fluid level (5).

9. The valve as set forth in claim 8, **characterized in that** the inlet tube (11) is configured bow-shaped and the inlet end (2) thereof protrudes into the fluid (3) from above.

10. The valve as set forth in claim 9, **characterized in that** the inlet tube (11) extends from below through a base surface area (13) and through a section of the pressure vessel (7) which is filled with magnetic fluid (3) and up to above the fluid level (5) and from there downwards again into the fluid (3).

11. The valve as set forth in claim 9 or 10, **characterized in that** at least one inlet tube (11, 15, 26, 27) extends from above through an upper side (8) of the pressure vessel (7) and into the fluid (3).

12. The valve as set forth in any of the preceding claims, **characterized in that** the pressure vessel (7) is cylindrical or cuboidal in shape.

13. The valve as set forth in any of the preceding claims, **characterized in that** the lower part (13') of the pressure vessel (7) is rounded.

14. The valve as set forth in any of the preceding claims, **characterized in that** the gas outlet (6) is provided on the upper side (8) of the pressure vessel (7).

15. The valve as set forth in claim 14, **characterized in that** the gas outlet comprises at least one outlet tube (17, 18) having an end (24, 25) which protrudes from above into the magnetic fluid (3).

16. The valve as set forth in any of the preceding claims, **characterized in that** a vent tube (14) protrudes from above into the magnetic fluid (3).

17. The valve as set forth in any of the preceding claims, **characterized in that** a permanent magnet (19) which is movable to and away from the magnetic fluid (3) is provided for applying a magnetic field.

18. The valve as set forth in claim 17, **characterized in that** the permanent magnet (19) annularly surrounds the pressure vessel (7) and is shiftable parallel to the shell surface (20) of the pressure vessel (7) from a non-actuated position into an actuated position in which the permanent magnet (19) surrounds at least in part the part of the pressure vessel (7) filled with the magnetic fluid (3).

19. The valve as set forth in claim 18, **characterized in that** the permanent magnet (19) is shiftable on the shell surface (20) of the pressure vessel (7).

20. The valve as set forth in any of the preceding claims, **characterized in that** several permanent magnets are arranged opposite each other so that their magnetic fields each act on the fluid (3) in the region of at least one inlet tube (11, 15, 26, 27) or at least one outlet tube (17, 18).

21. The valve as set forth in claim 20, **characterized in that** permanent magnets are movable on a guide to and away from the pressure vessel.

22. The valve as set forth in any of the preceding claims, **characterized in that** at least one switchable electromagnet (9, 19) is provided.

23. The valve as set forth in claim 22, **characterized in that** the electromagnet (9, 19) surrounds at least in part the part of the pressure vessel (7) filled with magnetic fluid (3).

24. The valve as set forth in claim 13 and claim 22 or 23, **characterized in that** the electromagnet (9) is shiftable on the rounded lower part (13') of the pressure vessel (7).

25. The valve as set forth in any of claims 22 to 24, **characterized in that** several electromagnets (9, 16) are arranged opposite each other so that their magnetic fields each act in the region of at least one inlet tube (11) or at least one outlet tube (17).

26. The valve as set forth in any of claims 22 to 25, **characterized in that** the electromagnets (9, 16) are switched separately or in common.

27. The valve as set forth in any of claims 22 to 26, **characterized in that** by applying a continuously variable amperage to the at least one electromagnet (9, 19) the viscosity of the magnetic fluid (3) can be continuously varied, so that depending on the viscosity of the magnetic fluid (3) more or less gas flows, as a result of which a continuously adjustable valve (1) is produced.

28. The valve as set forth in any of the preceding claims, **characterized in that** the fluid level (5, 5a) within the pressure vessel (7) can be varied.

29. The valve as set forth in claim 28, **characterized in that** the fluid level (5, 5a) can be varied as desired via a filler tube (28) protruding from above into the fluid (3) and sealable against gas flow.

30. A multiway gas flow valve, **characterized in that** the multiway valve is formed by a plurality of switchable gas flow valves (1) as set forth in any of claims 1 to 29, the gas flow valves (1) being connected correspondingly to each other.

## Revendications

1. Soupape à écoulement de gaz comportant au moins une admission (2) de gaz et au moins une sortie (6) de gaz, dans laquelle il est prévu, dans la soupape, un liquide (3) magnétique dans le flux d'écoulement entre l'admission (2, 23) de gaz et la sortie (6) de gaz, ledit liquide magnétique (3) se solidifiant lorsque le champ magnétique est appliqué et interrompant de manière étanche au gaz le flux d'écoulement depuis au moins une admission (2, 23) de gaz vers une ou plusieurs sorties (6) de gaz, et permettant l'écoulement de gaz lorsque le champ magnétique n'est pas appliqué, **caractérisée en ce que** des particules non-magnétiques (4) sont présentes dans le liquide (3) magnétique.

2. Soupape selon la revendication 1, **caractérisée en ce que** des particules métalliques paramagnétiques et diamagnétiques et/ou des élastomères, en tant que particules non-magnétiques (3), sont présentes dans le liquide (3) magnétique.

3. Soupape à écoulement de gaz comportant au moins une admission (2) de gaz et au moins une sortie (6) de gaz, dans laquelle il est prévu, dans la soupape, un liquide (3) magnétique dans le flux d'écoulement entre l'admission (2, 23) de gaz et la sortie (6) de gaz, ledit liquide magnétique (3) se solidifiant lorsque le champ magnétique est appliqué et interrompant de manière étanche au gaz le flux d'écoulement depuis au moins une admission (2, 23) de gaz vers une ou plusieurs sorties (6) de gaz, et permettant l'écoulement de gaz lorsque le champ magnétique n'est pas appliqué, **caractérisée en ce que** des tensides sont présents dans le liquide (3) magnétique.

4. Soupape selon l'une quelconque des revendications précédentes, **caractérisée en ce que** le niveau de liquide (5, 5a) est adapté à l'admission (2, 23) de gaz et à la sortie (6) de gaz de telle sorte que lorsque l'admission (2, 23) de gaz et la sortie (6) de gaz sont ouvertes, le gaz s'écoule à travers le liquide (3).

5. Soupape selon l'une quelconque des revendications précédentes, **caractérisée en ce que** pour ouvrir au moins une admission (2, 23) de gaz et/ou une sortie (6) de gaz, le champ magnétique agit sur le liquide (3) dans une direction et avec une force telles que celui-ci est refoulé dans la région de l'admission (2, 23) de gaz et/ou de la sortie (6) de gaz de sorte que, sans s'écouler à travers le liquide (3), du gaz peut s'écouler directement depuis l'admission (2, 23) de gaz jusqu'à la sortie (6) de gaz.

6. Soupape selon l'une quelconque des revendications précédentes, **caractérisée en ce que** la soupape est une soupape à deux voies et deux positions.

7. Soupape selon l'une quelconque des revendications 1 à 5, **caractérisée en ce que** la soupape est une soupape à plusieurs voies.

8. Soupape selon l'une quelconque des revendications précédentes, **caractérisée en ce qu'**entre l'admission (2, 23) de gaz et la sortie (6) de gaz est prévu un récipient de pression (7) qui est rempli au moins partiellement avec le liquide magnétique (3), dans lequel plonge au moins un tube d'admission (11, 15, 26, 27), une partie du tube d'admission (11, 15, 26, 27) s'étendant au-dessus du niveau de liquide (5).

9. Soupape selon la revendication 8, **caractérisée en ce que** le tube d'admission (11) est réalisé en forme d'arc et son extrémité d'admission (2) plonge depuis le haut dans le liquide (3).

10. Soupape selon la revendication 9, **caractérisée en ce que** le tube d'admission (11) s'étend depuis le bas à travers une surface de base (13) et un tronçon du récipient de pression (7), qui est rempli de liquide magnétique (3) jusqu'au-dessus du niveau de liquide (5) et de là vers le bas jusque dans le liquide (3).

11. Soupape selon la revendication 9 ou 10, **caractérisée en ce qu'**au moins un tube d'admission (11, 15, 26, 27) s'étend depuis le haut à travers une face supérieure (8) du récipient de pression (7) jusque dans le liquide (3).

12. Soupape selon l'une quelconque des revendications précédentes, **caractérisée en ce que** le récipient de pression (7) est cylindrique ou parallélépipédique.

13. Soupape selon l'une quelconque des revendications précédentes, **caractérisée en ce que** la partie inférieure (13') du récipient de pression (7) est arrondie.

14. Soupape selon l'une quelconque des revendications précédentes, **caractérisée en ce que** la sortie (6) de gaz est prévue sur la face supérieure (8) du récipient de pression (7).

15. Soupape selon la revendication 14, **caractérisée en ce que** la sortie de gaz comprend au moins un tube de sortie (17, 18) avec une extrémité (24, 25) qui plonge depuis le haut dans le liquide magnétique (3).

16. Soupape selon l'une quelconque des revendications précédentes, **caractérisée en ce qu'**un tube de désaérage (14) plonge depuis le haut dans le liquide magnétique (3).

17. Soupape selon l'une quelconque des revendications précédentes, **caractérisée en ce qu'**un aimant permanent (19) qui peut être déplacé vers le liquide magnétique (3) et en éloignement de celui-ci est prévu pour appliquer un champ magnétique.

18. Soupape selon la revendication 17, **caractérisée en ce que** l'aimant permanent (19) entoure de façon annulaire le récipient de pression (7) et est déplaçable depuis une position non actionnée dans une position actionnée dans laquelle il entoure au moins partiellement la partie du récipient de pression (7) qui est remplie avec le liquide magnétique (3).

19. Soupape selon la revendication 18, **caractérisée en ce que** l'aimant permanent (19) est déplaçable sur la surface enveloppe (20) du récipient de pression (7).

20. Soupape selon l'une quelconque des revendications précédentes, **caractérisée en ce que** plusieurs aimants permanents sont agencés à l'opposé les uns des autres de sorte que leur champ magnétique agit respectivement sur le liquide (3) dans la région d'au moins un tube d'admission (11, 15, 26, 27) ou au moins d'un tube de sortie (17,18).

21. Soupape selon la revendication 20 , **caractérisée en ce que** des aimants permanents peuvent être déplacés sur un guidage vers le récipient de pression et en éloignement de celui-ci.

22. Soupape selon l'une quelconque des revendications précédentes, **caractérisée en ce qu'**il est prévu au moins un électroaimant (9, 19) commutable.

23. Soupape selon la revendication 22, **caractérisée en ce que** l'électroaimant (9, 19) entoure au moins partiellement la partie du récipient de pression (7) qui est remplie de liquide magnétique (3).

24. Soupape selon la revendication 13 et la revendication 22 ou 23, **caractérisée en ce que** l'électroaimant (9) est déplaçable dans la partie inférieure (13') arrondie du récipient de pression (7).

25. Soupape selon l'une quelconque des revendications 22 à 24, **caractérisée en ce que** plusieurs électroaimants (9, 16) sont agencés à l'opposé les uns des autres, de sorte que leur champ magnétique agit respectivement dans la région d'au moins un tube d'admission (11) ou au moins d'un tube de sortie (17).

26. Soupape selon l'une quelconque des revendications 22 à 25, **caractérisée en ce que** les électroaimants (9, 16) sont commutés séparément ou en commun.

27. Soupape selon l'une quelconque des revendications 22 à 26, **caractérisée en ce que** par l'application d'une intensité de courant continuellement variable audit au moins un électroaimant (9, 19), la viscosité du liquide magnétique (3) peut continuellement être modifiée de sorte que selon la viscosité du liquide magnétique (3) il s'écoule plus ou moins de gaz, grâce à quoi on obtient une soupape (1) réglable en continu.

28. Soupape selon l'une quelconque des revendications précédentes, **caractérisée en ce qu'**on peut varier le niveau de liquide (5, 5a) du récipient de pression (7).

29. Soupape selon la revendication 28, **caractérisée en ce qu'**on peut varier à volonté le niveau de liquide (5, Sa) par un tube de remplissage (28) plongeant depuis le haut dans le liquide (3) et qui peut être étanché vis-à-vis du flux de gaz.

30. Soupape à plusieurs voies à écoulement de gaz, **caractérisée en ce que** la soupape à plusieurs voies est formée à partir de plusieurs soupapes à écoulement de gaz (1) selon l'une quelconque des revendications 1 à 29, les soupapes à écoulement de gaz étant commutables et reliées les unes aux autres de manière correspondante,
